(19) Europäisches Patentamt
European Patent Office
Office européen des brevets

(11) Publication number: **0 114 525**
**A2**

(12) **EUROPEAN PATENT APPLICATION**

(21) Application number: 83307935.3

(22) Date of filing: 23.12.83

(51) Int. Cl.³: C 08 F 297/02
C 08 F 8/36, C 10 M 3/00

(30) Priority: 29.12.82 US 454241
29.12.82 US 454243
29.12.82 US 454279

(43) Date of publication of application:
01.08.84 Bulletin 84/31

(84) Designated Contracting States:
BE DE FR GB IT NL

(71) Applicant: Exxon Research and Engineering Company
P.O.Box 390 180 Park Avenue
Florham Park New Jersey 07932(US)

(72) Inventor: Bock, Jan
500 Juniper Lane
Bridgewater New Jersey 08802(US)

(72) Inventor: Kowalik, Ralph Martin
880 Country Club Road
Bridgewater New Jersey 08807(US)

(72) Inventor: Valint, Paul Louis, Jr.
RR1. Box 248
Ashbury New Jersey 08802(US)

(74) Representative: Field, Roger Norton et al,
ESSO Engineering (Europe) Ltd. Patents & Licences Apex Tower High Street
New Malden Surrey KT3 4DJ(GB)

(54) **Water soluble block polymers.**

(57) The present invention relates to viscosification agents for water and oil solubilization agents which are diblock polymers of t-butylstyrene/metal styrene sulfonate and triblock polymers of t-butylstyrene/metal styrene sulfonate/t-butylstyrene.

FIG. 1

t-BUTYLSTYRENE-STYRENE DIBLOCK POLYMER SYNTHESIS

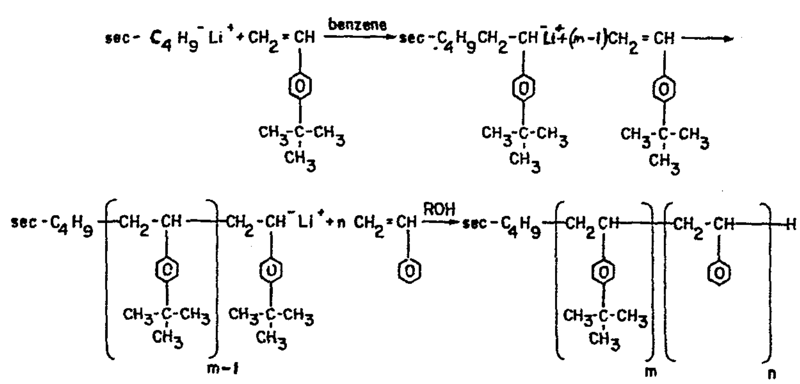


EP 0 114 525 A2

Croydon Printing Company Ltd.

The present invention relates to a process for the formation of water soluble sulfonated triblock polymers of t-butylstyrene/metal styrene sulfonate/t-butylstyrene, and water soluble diblock polymers of t-butylstyrene/metal styrene sulfonate, wherein the diblock polymers of t-butylstyrene/styrene or the triblock polymers of t-butylstyrene/styrene/t-butylstyrene are formed by an anionic polymerization process and the formed diblock or triblock polymer is selectively sulfonated on the styrene blocks. The diblock polymers of t-butylstyrene/metal styrene sulfonate or the triblock polymers of t-butylstyrene/metal styrene sulfonate/t-butylstyrene are excellent viscosification agents for aqueous solutions.. The outer soluble di- and triblock polymers of the present invention are effective oil solubilization agents and they are also useful as drag reduction for aqueous solutions.

The water soluble diblock polymers of t-butylstyrene/metal styrene sulfonate, triblock polymers of t-butylstyrene/metal styrene sulfonate/t-butylstyrene are formed by the selective sulfonation of the styrene block of the diblock polymer of t-butylstyrene/styrene or triblock polymer of t-butylstyrene styrene/t-butylstyrene. These diblock or triblock polymers are formed by the anionic polymerization of styrene monomer and t-butylstyrene. The process of forming the diblock copolymers of t-butylstyrene/styrene and the triblock polymers of t-butylstyrene/styrene/t-butylstyrene is based on a synthetic reaction sequence to form the block polymers of t-butylstyrene-b-styrene sulfonate by means of an anionic polymerization of t-butylstyrene

followed by the addition of styrene monomer to continue polymerization on the living anion polymer. All polymerizations were initiated with sec-butyl lithium to form the t-butylstyrene anion. Additional t-butylstyrene was added for the desired chain length of that block followed by the addition of styrene only for diblock polymer preparation. Chain termination was accomplished by the addition of an alcohol to the reaction mixture to protonate the chain and anionic functionality. The overall reaction sequence for the diblock polymer synthesis is illustrated in Figure 1.

The preparation of triblock polymer with end blocks of t-butylstyrene was done sequentially, again, starting with initiation of t-butylstyrene polymerization by sec-butyl lithium. After addition of styrene to form the midblock, t-butylstyrene monomer was again added to the living polymer chain to complete the triblock polymer synthesis as schematically presented in Figure 2.

The present polymerization process for preparing the diblock polymers of t-butylstyrene/styrene comprises the steps of forming a t-butylstyrene anion by initiation of t-butylstyrene monomer with sec-butyl lithium; adding additional t-butylstyrene to t-butylstyrene anion to obtain the desired chain length of the t-butylstyrene block; adding styrene to the living anion polymer of t-butylstyrene until the desired chain length of the styrene block has been achieved; and terminating the polymerization by the addition of alcohol.

The polymerization process for preparing the triblock polymers of t-butylstyrene/styrene/t-butylstyrene comprises the additional steps of adding additional t-butylstyrene to the living anion of the t-butylstyrene/styrene polymer prior to chain termination by an alcohol.

The diblock polymers of t-butylstyrene/styrene are represented by the formula:

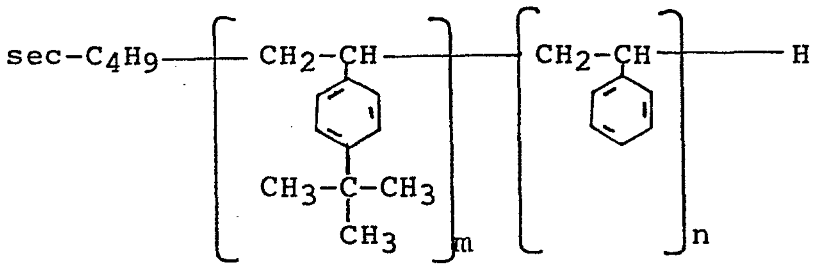

wherein m is 0.5 to 15.0 mole %, more preferably 1.0 to 12.0 mole %, and most preferably 2.0 to 12.0 mole %, and n is 85.0 to 99.5 mole %, more preferably 88.0 to 99.0 mole %, and most preferably 88.0 to 98.0 mole %. The molecular weight, as determined by gel permeation chromatography, for these diblock polymers of t-butylstyrene/styrene is 100,000 to 3,000,000, more preferably 200,000 to 2,000,000 and most preferably 400,000 to 1,000,000.

The triblock polymers of t-butylstyrene/styrene/t-butylstyrene are represented by the formula:

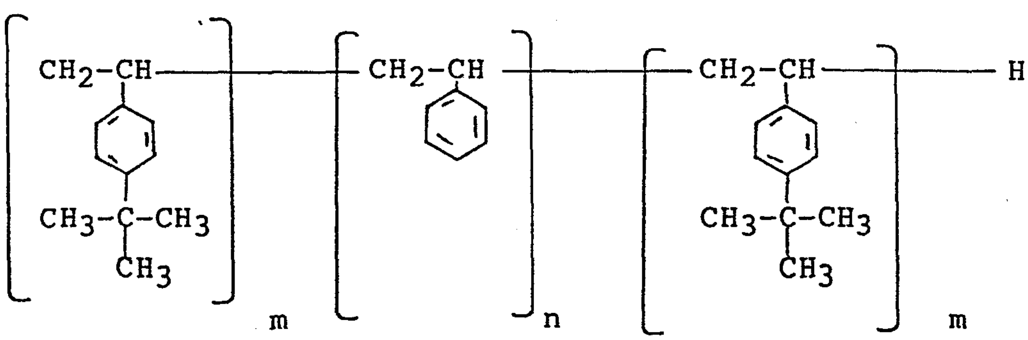

wherein m is 0.25 to 7.5 mole %, more preferably 0.5 to 6.0 mole %, and most preferably 1.0 to 6.0 mole %, and n is 85.0 to about 99.5 mole %, more preferably 88.0 to 99.0 mole %, and most preferably 88.0 to 98.0 mole %. The molecular weight, as determined by gel permeation chromotography, for these triblock polymers of t-butylstyrene/styrene/t-butylstyrene is 100,000 to 3,000,000 more preferably 200,000 to 2,000,000 and most preferably 400,000 to 1,000,000.

The diblock polymers of t-butylstyrene/styrene or the triblock polymers of t-butylstyrene/styrene/t-butylstyrene are sulfonated according to schematic sequence as illustrated in Figure 3.

In carrying out the invention, the polymer is dissolved in a non-reactive solvent such as a chlorinated aliphatic hydrocarbon, or chlorinated aromatic such as dichlorethane. A sulfonating agent is added to the solution of the polymer and non-reactive solvent at a temperature of -100°C to 100°C for a period of time of 1 to 60 minutes, most preferably at 0°C for 5 to 45 minutes; and most preferably 15 to 30. Typical sulfonating agents are described in U.S. Patent 3,642,728. These sulfonating agents are a complex of a sulfur trioxide donor and a Lewis base containing oxygen, sulfur, or phosphorus Typical sulfur trioxide donors are $SO_3$, chlorosulfonic acid, fluorosulfonic acid, sulfuric acid, oleum, etc. Typical Lewis bases are: dioxane, tetrahydrofuran, tetrahydrothiophene, or triethylphosphate. The most preferred sulfonation agent for this invention is a complex of $SO_3$ with triethylphosphate.

The acid form of the diblock or triblock polymer is neutralised by the addition of a solution of a basic material to a solution of the unneutralized, sulfonated diblock or triblock polymer. Suitable neutralizing agents are selected from metal hydroxides, metal acetates or metal alkoxides, wherein the metal cation is selected from iron, aluminum, lead, Groups IA, IB, IIA and IIB of the Periodic Table of Elements, wherein the sodium ion is preferred. The preferred neutralizing agents are an aqueous solution of sodium hydroxide or a solution of sodium methoxide in methanol.

The process for solubilizing a hydrocarbon liquid into an aqueous solution, wherein the water soluble di- or triblock polymer is used as an oil solubilization agent, comprises the steps of forming an aqueous solution of the diblock polymer of t-butylstyrene/metal styrene sulfonate or the triblock polymer of t-butylstyrene/metal styrene sulfonate/t-butylstyrene, wherein the concentration of the diblock or triblock polymer is about 0.005 to about 5 grams of the diblock or triblock polymers per 100 grams of water, wherein the aqueous solution has a viscosity of about 2 cP to about 5000 cP at room temperature, more preferably about 5 cP to about 1000 cP, and most preferably about 5 cP to about 500 cP; adding about 0.002 to about 1.0 grams of a hydrocarbon liquid to 100 grams of the aqueous solution of the diblock or triblock polymer, wherein the hydrocarbon liquid is selected from an aliphatic hydrocarbon having about 4 to about 12 carbon atoms, a cycloaliphatic hydrocarbon having about 5 to about 7 carbon atoms, an aromatic hydrocarbon having about 6 to about 20 carbon atoms, an aliphatic oil, a naphthenic oil and an aromatic oil; and stirring the oil and aqueous solution

until a homogeneous solution has been obtained which has a viscosity of about 2 cP to about 5000 cP at room temperature.

In the drawings:

Figure 1 illustrates schematically the preparation of a diblock polymer of t-butylstyrene/styrene;

Figure 2 illustrates schematically the preparation of a triblock polymer of t-butylstyrene/styrene/t-butylstyrene;

Figure 3 illustrates schematically the preparation of a diblock polymer of t-butylstyrene/metal styrene sulfonate/t-butylstyrene;

Figure 4 illustrates a plot of viscosity versus shear rate for a sulfonated diblock polymer having 11 wt. % hydrophobe;

Figure 5 illustrates a plot of viscosity versus shear rate for a sulfonated diblock polymer having 5 wt. % hydrophobe;

Figure 6 illustrates a plot of viscosity versus shear rate for a sulfonated triblock polymer having 5 wt. % hydrophobe;

Figure 7 illustrates a comparison of reduced viscosity of block and random polymer by a plot of reduced viscosity versus concentration.

Figure 8 illustrates a plot of viscosity versus shear rate for a sulfonated diblock polymer having 11 wt. % hydrophobe;

Figure 9 illustrates a plot of viscosity versus shear rate for the effect of toluene solubilization; and

Figure 10 illustrates a plot of viscosity versus shear rate for the effect of toluene solubilization on relative zero shear viscosity.

The following examples illustrate the present invention.

## EXAMPLE 1

### Preparation of Hydrocarbon Soluble Block Prepolymers

The synthesis reaction sequence for the preparation of block polymers of t-butylstyrene-b-styrene sulfonate began with the anionic polymerization of t-butylstyrene followed by the addition of styrene monomer to continue polymerization on the living anion polymer. All polymerizations were initiated with sec-butyl lithium to form the t-butylstyrene anion. Additional t-butylstyrene was added for the desired chain length of that block followed by the addition of styrene only for diblock polymer preparation. Chain termination was accomplished by the addition of an alcohol to the reaction mixture to protonate the chain and anionic functionality. The overall reaction sequence for the diblock polymer synthesis is presented in Figure 1.

The preparation of triblock polymer with end blocks of t-butylstyrene was done sequentially, again, starting with initiation of t-butylstyrene polymerization by sec-butyl lithium. After addition of styrene to form the midblock, t-butylstyrene monomer was again added to the living polymer chain to complete the triblock polymer synthesis as schematically presented in Figure 2.

A number of block polymers were prepared and the compositional data are presented in Table I(page 14)The diblock polymer at 11 weight % t-butylstyrene-89 weight % styrene (D11-TBS-S) had a weight average molecular weight of 4.7 x $10^5$. The triblock polymer of composition, 2.5 weight % t-butylstyrene - 95 weight % styrene - 2.5 weight % t-butylstyrene had a weight average molecular weight approximately 20% higher than the diblock polymer at 6.1 x $10^5$.

The compositional data for five diblock polymers, all at a composition of 5 weight t-butylstyrene - 95 weight % styrene, are also presented in Table I. Their molecular weights covered a range from 140,000 to 1,000,000. Random polymers of 5 and 10 weight % t-butylstyrene content were also prepared with molecular weights of 480,000 and 500,000 respectively. All of the molecular weights were determined by gel permeation chromatography (GPC) techniques.

## EXAMPLE 2

### Preparation of Poly(t-butylstyrene-b-styrene)

In a vacuum system, 900 ml. of dry benzene was distilled over styryl lithium directly into a reactor. Sec-butyl lithium, 0.0128 g., was added to the benzene followed by 5.0 g. of t-butylstyrene. The mixture was stirred at ambient temperature for 12 hours after which 95 g. of styrene was added and the mixture was stirred at ambient temperature for 24 hours. The polymerization was terminated by the addition of a few drops of degassed methanol. The resulting polymer was isolated by freeze-drying to remove the benzene solvent. The resulting polymer was determined to have a weight average molecular weight of 520,000 by gel permeation chromatography.

## EXAMPLE 3

### Sulfonation of Block Prepolymers

The sulfonation techniques, shown in Figure 3, for the preparation of all the water soluble sulfonate polymers utilized sulfur trioxide ($SO_3$) complexed with triethyl phosphate (TEP) as the sulfonating agent. The solvent medium was dichloroethane (DCE) chosen because the t-butylstyrene-styrene polymers were soluble, whereas the sulfonated polymers were insoluble in this solvent. This combination of solubility properties allowed for facile isolation of the desired sulfonated polymer that underwent little, if any, cross-linking. With more potent sulfonating agents, such as uncomplexed $SO_3$, cross-linking via sulfone functionality can be a serious consequence resulting in insoluble gel-like

polymers. In the sulfonation of the block polymers, only the styrene block was sulfonated, since the preferred para positions of the t-butylstyrene block were already occupied. Also the steric bulk of the t-butyl group effectively inhibits sulfonation of the remaining positions on the substituted aromatic ring. Therefore, after neutralization of the styrene sulfonic acid block to the sodium salt, the polymers then consisted of a hydrophobic block, t-butylstyrene, and a hydrophilic block, sodium styrene sulfonate.

The general sulfonation procedure was to place 0.2 equivalent of triethylphosphate (TEP) dissolved in dichloroethane (DCE) (2g TEP/100 ml DCE) into a dry reactor fitted with mechanical stirrer, two dropping funnels and thermometer. The solution was cooled to 0°C and 1.0 eq. of block polymer dissolved in DCE (5 g polymer/100 ml DCE) was placed in a dropping funnel and 1.1 eq. of $SO_3$ in DCE in the other dropping funnel. The $SO_3$ solution followed by polymer solution were added alternately in 10% portions to the reactor while maintaining the temperature at 0°C. The sulfonated polymer precipitated from solution and was isolated by filtration and washed with pentane. The white, granular polymer was then dried under vacuum at room temperature.

The sodium salts of the sulfonated block polymers were prepared by neutralization of the free acid polymers in methanol with aqueous NaOH or with sodium methoxide in methanol to a solution pH of 7.0. The methanolic solutions of the polymers were then evaporated to dryness under vacuum to isolate the sodium salts of the sulfonated polymers. Analytical data are presented in Table II (page 15).

## EXAMPLE 4

### Solution Rheology

To evaluate the rheological properties of aqueous solutions of these block polymers, the polymers were first dissolved in doubly distilled water at an initial concentration of 2500 ppm under mild agitation conditions (magnetic stirrer) at room temperature. Generally, dissolution of the polymers was complete after 24 hours of agitation. Solutions at lower polymer concentrations were obtained by dilution of these concentrates with distilled water.

The rheology in terms of a viscosity-shear rate profile was obtained using a Contraves LS-30 Couette viscometer. The shear rates investigated were from 0.02 to 120 $sec^{-1}$. Due to the high viscosity of some solutions, the lower shear rates (<1 $sec^{-1}$) were not obtained due to shear stress limitations of the instrument. Since most of the samples exhibited psuedoplastic behavior, it was important to determine viscosity as a function of shear rate in order to make valid comparisons between polymer structure and solution properties.

The curves of viscosity as a function of shear rate for D11-TBS-SS in distilled water are given in Figure 4 at concentrations from 500 to 2500 ppm in increments of 500 ppm. As can be observed from these data, at or above 1500 ppm the log-log plots show a linear decrease in viscosity over the shear rate range measured. This pseudoplastic behavior can thus be represented by a simple power law relationship. At concentrations of 1000 ppm and below, a Newtonian or shear rate independent viscosity can be determined at

low shear rates. This so-called zero shear viscosity can be used to construct reduced viscosity - concentration plots providing information on the hydrodynamic volume of the polymer in solution. This will be discussed in Example 5.

In order to examine the effect of structural parameters of the block polymers on solution rheology, two additional polymers were prepared. One was diblock polymer (D5-TBS-SS) containing 3.3 mole % t-butylstyrene and 96.7 mol % of styrene sulfonate with a weight average molecular weight of $9.0 \times 10^5$. This resulted in the polymer containing approximately 163 t-butylstyrene units and 4750 styrene sulfonate units. The other polymer was a triblock polymer (T5-TBS-SS) of $10.5 \times 10^5$ molecular weight which consisted of a midblock of 96.7 mole % styrene sulfonate and two equal end blocks of 1.65 mole %. The styrene sulfonate block consisted of 5570 monomer units while the t-butylstyrene endblocks were of 95 units each.

The rheological data for the diblock and triblock polymers are presented in log-log plots of viscosity versus shear rate in Figure 5 and 6. The diblock polymer, D5-TBS-SS, in aqueous solution has a higher viscosity at low concentration (500 ppm) than D11-TBS-SS, the diblock of higher t-butylstyrene content. This may be due to the greater molecular weight of diblock, D5-TBS-SS relative to D11-TBS-SS as seen in Table I. The observation of lower viscosity, at 1000 ppm and greater for D5-TBS-SS, could be a result of decreased polymer association due to the smaller t-butylstyrene block length.

The data in Figure 6 for the triblock polymer, T5-TBS-SS, showed that this polymer had lower viscosity than the comparable diblock over the concentration range investigated even though its molecular weight was some 20% greater than that of diblock (see Table I). The viscosity levels exhibited by the triblock polymer in aqueous solution, again indicates that aggregation of polymer molecules was occuring. However, the extent and/or type of association appears to be different than the diblock polymers.

## EXAMPLE 5

### Comparison With Random Copolymers and Homopolymers

A comparison of the reduced viscosity as a function of polymer concentration for the block polymer, D5-TBS-SS, and random copolymer, R5-TBS-SS, of the same composition is shown in Figure 7. Both polymers had a t-butylstyrene content of 5 wt% (3.3 mole %) with a $M_w$ for the block polymer of $9.0 \times 10^5$ and $8.3 \times 10^5$ for the random copolymer. As can be readily seen from the plots in Figure 7, the random polymer solution behavior was quite different than that for the corresponding block polymer. The most striking difference is that the block polymer solution intrinsic viscosity is some 30 to 40 times greater than that for the random polymer. Also the reduced viscosity curve for R5-TBS-SS was more closely related to that for a homopolystyrene sulfonate of $M_w = 6.5 \times 10^5$. The random copolymer had slightly higher solution viscosity which could have been due to its higher molecular weight and that the homopolymer solution contained salt (0.005 M NaCl) compared to the pure water medium for R5-TBS-SS.

TABLE I

Copolymer Compositional Data

| Polymer | Composition, wt.% (Mole %) Block t-Butylstyrene | Styrene | t-Butylstyrene | Molecular Weight $M_w \times 10^5$ | $M_n \times 10^5$ | $M_z \times 10^5$ |
|---|---|---|---|---|---|---|
| D5-TBS-S1 | 5(3.3) | 95(96.7) | - | 1.4 | 1.3 | 1.4 |
| D5-TBS-S2 | 5(3.3) | 95(96.7) | - | 2.8 | 2.7 | 2.9 |
| D5-TBS-S3 | 5(3.3) | 95(96.7) | - | 5.2 | 4.9 | 5.5 |
| D5-TBS-S4 | 5(3.3) | 95(96.7) | - | 7.2 | 6.9 | 7.7 |
| D5-TBS-S5 | 5(3.3) | 95(96.7) | - | 10 | 9.4 | 1.1 |
| D11-TBS-S | 11(7.4) | 89(92.6) | - | 4.7 | 4.4 | 4.9 |
| T5-TBS-S | 2.5(1.65) | 95(96.7) | 2.5(1.65) | 6.1 | 5.7 | 6.4 |
| | RANDOM | | | | | |
| R5-TBS-S | 5(3.3) | 95(96.7) | | 4.8 | 4.6 | 5.2 |
| R10-TBS-S | 10(6.7) | 90(93.3) | | 5.0 | 4.6 | 5.2 |

TABLE II

MOLECULAR WEIGHT AND ELEMENTAL ANALYSES OF SULFONATED POLYMERS

| POLYMER | Molecular Weight $M_W \times 10^{-5}$ | Elemental Analyses Calc. S | Elemental Analyses Calc. Na | Elemental Analyses Found S | Elemental Analyses Found Na | Sulfonation Extent(a) |
|---|---|---|---|---|---|---|
| D5-TBS-SS1 | 2.4 | 15.13 | 10.88 | 16.16 | 10.1 | 1.06 |
| D5-TBS-SS2 | 4.7 | 15.13 | 10.88 | 13.78 | 9.54 | 0.91 |
| D5-TBS-SS3 | 9.0 | 15.13 | 10.88 | 15.47 | 10.4 | 1.02 |
| D5-TBS-SS4 | 12 | 15.13 | 10.88 | 12.58 | 8.19 | 0.83 |
| D5-TBS-SS5 | 17 | 15.13 | 10.88 | 12.88 | 9.11 | 0.85 |
| R5-TBS-SS | 8.3 | 15.13 | 10.88 | 15.79 | 10.6 | 1.04 |
| R10-TBS-SS | 8.5 | 14.71 | 10.57 | 14.20 | 1.5 | 0.96 |

(a) Sulfonation extent, S(Found)/S(calc.), is a measure of sulfonate groups per styrene unit.

## EXAMPLE 5

### Block Polymers Compositions

The block polymers of this invention contained sodium styrene sulfonate as the water/soluble block and t-butylstyrene as the water insoluble or hydrophobic block. The synthetic reaction sequence to the block polymer t-butylstyrene-styrene sulfonate began with the anionic polymerization of t-butylstyrene followed by the addition of styrene monomer to continue polymerization on the living anion polymer. All polymerizations were initiated with sec-butyl lithium to form the t-butylstyrene anion. Additional t-butylstyrene was added for the desired chain length of that block followed by the addition of styrene only for diblock polymer preparation. Chain termination was accomplished by the addition of an alcohol to the reaction mixture to protonate the chain and anionic functionality.

The preparation of triblock polymer with end blocks of t-butylstyrene was done sequentially, again, starting with initiation of t-butylstyrene polymerization by sec-butyl lithium. After addition of styrene to form the mid block, t-butylstyrene monomer was again added to the living polymer chain to complete the triblock polymer synthesis.

The sulfonation technique for the preparation of all the water soluble sulfonate polymers utilized sulfur trioxide ($SO_3$) complexed with triethyl phosphate (TEP) as the sulfonation agent. The solvent medium was dichloroethane (DCE), chosen because the t-butylstyrene-styrene polymers were soluble, whereas the sulfonated polymers were insoluble in this solvent.

The combination of solubility properties allowed for facile isolation of the desired sulfonated polymer that underwent little, if any, cross-linking. With more potent sulfonating agents, such as uncomplexed $SO_3$, cross-linking via sulfone functionality can be a serious consequence resulting in insoluble gel-like polymers. In the sulfonation of the block polymers, only the styrene block was sulfonated since the steric bulk of the t-butyl group effectively inhibited sulfonation of the substituted aromatic ring. Therefore, after neutralization of the styrene sulfonic acid block to the sodium salt, the polymers then consisted of a hydrophobic block, t-butylstyrene, and a hydrophilic block, sodium styrene sulfonate.

Two block polymers of styrene-t-butylstyrene were prepared. The compositional data for these polymers are presented in Table III. (Page 20) The diblock polymer at 11 wt. % t-butylstyrene - 89 wt. % styrene had a weight average molecular weight of $4.7 \times 10^5$. The triblock polymer of composition 2.5 wt. % t-butylstyrene - 95 wt. % styrene - 2.5 wt. % t-butylstyrene had a weight average molecular weight approximately 20% higher than the diblock polymer at $6.1 \times 10^5$.

## EXAMPLE 6

## Solution Viscometrics

To evaluate the rheological properties of aqueous solutions of these block polymers, the polymers were first dissolved in doubly distilled water at an initial concentration of 2500 ppm under mild agitation conditions (magnetic stirrer) at room temperature. Generally, dissolution of the polymer was complete after 24 hours of agitation. Solutions at lower polymer concentration were obtained by dilution of these concentrates with distilled water. To assess the influence of oil on the solution rheology, toluene was added directly to the solution of desired polymer concentration. An additional 24 hours of agitation was provided to ensure system homogeneity.

The rheology, in terms of viscosity-shear rate profile, was obtained using a Contraves LS-30 Couette viscometer. The shear rate range investigated was from 0.02 to 120 $sec^{-1}$. Due to the high viscosity of some solutions, the lower shear rates (<1 $sec^{-1}$) were not obtained due to shear stress limitations of the instrument. Since most of the samples exhibited pseudo-plastic behavior, it is important to determine viscosity as a function of shear rate in order to make valid comparisons between polymer structure and solution properties. Figure 8 shows typical viscosity-shear rate behavior for a series of concentrations of D11-TBS-SS.

## EXAMPLE 7

### Effect of Toluene Addition on Solution Viscosity

A basis for studying hydrophobically associating block polymers involves the analogy with aqueous surfactant solutions. Above the CMC, surfactant solutions can solubilize hydrocarbons. To investigate the analogous phenomenon with block polymers, toluene was selected as the hydrocarbon to be added to the aqueous polymer solutions. This selection was based on good solubility of t-butylstyrene in aromatic hydrocarbon such as toluene.

It was indeed observed that a 1000 ppm solution of the block polymer would incorporate up to 1000 ppm of toluene resulting in a homogeneous phase of increased viscosity. This viscosity increase, with added oil, is shown in Figure 9 by the comparison of viscosity-shear rate plots of a 1000 ppm D11-TBS-SS solution with and without 500 ppm of toluene added. The effect of the level of toluene addition on the solution viscosity is shown in Figure 10. This is a plot of the relative zero shear viscosity of a polymer solution with toluene to that without toluene as a function of the ratio of toluene to polymer. When this ratio is less than 0.2, toluene does not affect the solution viscosity. Between 0.2 and 0.5, the viscosity increases significantly. Beyond 0.5 viscosity, again, is unaffected. Two further points can be observed from the data in Figure 10. First, in comparing a diblock and triblock polymer at the same polymer concentration, the relative viscosity increase is approximately the same as the ratio of hydrophobe chain lengths or hydrophobic concentration. Secondly, doubling the concentration (500 to 1000 ppm) of the triblock polymer with added toluene at saturation results in a 50% increase in the relative zero shear viscosity.

To confirm that, toluene uptake was associated with block polymer aggregation, similar experiments were attempted with the homopolymers. Under similar conditions of polymer and toluene concentrations, toluene solubilization was not observed. The toluene persisted as a second separate phase, and the viscosity of the polymer phase was not affected.

TABLE III

t-Butylstyrene-Styrene Block Polymer Compositional Data

| Polymer | Block Composition wt. % (Mole %) | | | Molecular Weight[(a)] | | |
|---|---|---|---|---|---|---|
| | t-Butylstyrene | Styrene | t-Butylstyrene | $M_w x10^{-5}$ | $M_x x10^{-5}$ | $M_z x10^{-5}$ |
| D-11-TBS-S | 11(7.4) | 89(92.6) | - | 4.7 | 4.4 | 4.9 |
| T-5-TBS-S | 2.5(1.65) | 95(96.7) | 2.5(1.65) | 6.1 | 5.7 | 6.4 |

(a) Determined by gel permeation chromatographic techniques.

## EXAMPLE 8

## Drag Reduction of Novel Copolymers

Drag reduction effectiveness was evaluated by flowing polymer/distilled water solutions through a 2.13 mm inside diameter stainless steel tube and measuring the resulting frictional pressure drop. Flows were generated by first loading a bladder accumulator with a previously dissolved polymer/distilled water solution and then discharging the solution through the tube test section. The bladder accumulator used (Greer-Olaer Model 30A - 2 1/2) is a 10 liter pressure vessel which contains an inflatable rubber bladder, a port for loading and discharging gas from the inside of the bladder and a port for loading and discharging liquid solutions from the space between the bladder and the interior vessel walls. To load the vessel with liquid, the bladder was first expanded with nitrogen gas such that the bladder filled the inside of the vessel. The liquid solution was then siphoned into the vessel as the bladder was evacuated. Subsequent charging of the vessel with nitrogen gas produced a flow of liquid which was directed to the 2.13 mm diameter tube. Pressure drops were measured across a 48 cm straight segment of the tube with a pair of flush mounted tube wall pressure taps and a differential pressure transmitter. Flow rates were measured by weighing samples of the effluent liquid collected over measured time periods.

Flow rates in the drag reduction experiments ranged from about 8 to 20 g/s; these correspond to solvent Reynolds numbers from about 5000 to 13000 (solvent Reynolds number = mean flow velocity x tube diameter ÷ solvent kinematic viscosity). Drag

reduction was measured by comparing pressure drops of the polymer/distilled water solutions with pressure drops of the distilled water solvent at equal flow rates. Results were expressed as percent drag reduction which is defined as follows:

$$\text{Percent Drag Reduction} = \frac{\text{Pressure Drop (Solvent)} - \text{Pressure Drop (Solution)}}{\text{Pressure Drop (Solvent)}} \times 100$$

Typical drag reduction results from experiments with the block polymer solutions are given in Table IV. Significant drag reduction was observed for all listed solutions. Each solution contained 89 parts per million (by weight) of polymer.

TABLE IV

DRAG REDUCTION DATA

| Sample | Hydrophobe Configuration | Type* | Level | Solvent Reynolds Number | Drag Reduction (%) |
|---|---|---|---|---|---|
| 1 | Triblock | TBS | 5% | 10,840 | 23.8 |
| 2 | Diblock | TBS | 5% | 10,500 | 7.6 |

CLAIMS:

1. A water soluble diblock polymer having the formula:

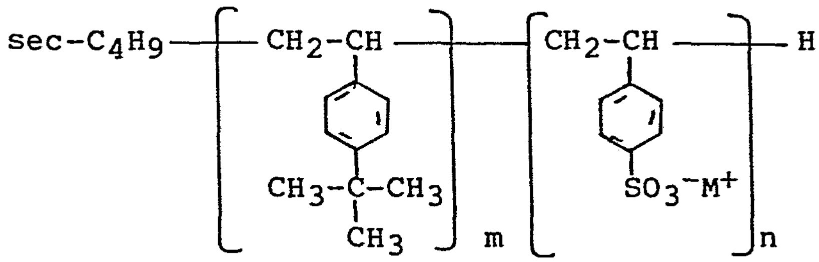

wherein m is 0.5 to 15.0 mole %, n is 85.0 to 99.5 mole %, and M is selected from hydrogen, iron, aluminum, lead and Groups IA, IIA, IB and IIB of the Periodic Table of Elements.

2. A water soluble triblock polymer having the formula:

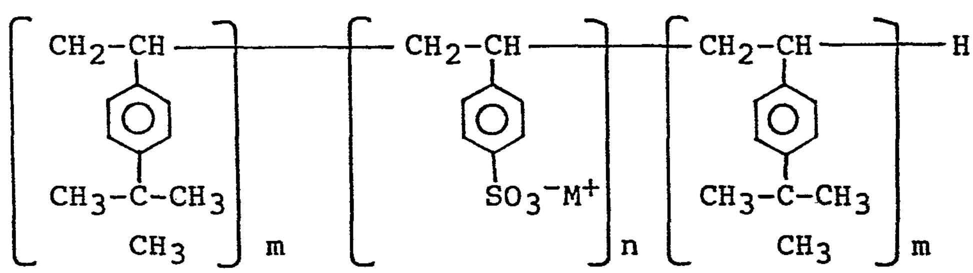

wherein m is 0.25 to 7.5 mole %, n is 85.0 to 99.5 mole %, and M is selected from hydrogen, iron, aluminum, lead and Groups IA, IIA, IB and IIB of the Periodic Table of Elements.

3. The use of the polymer according to either of claims 1 and 2 as a drag reducing agent.

4. The use of the polymer according to either of claims 1 and 2 as an oil solubilisation agent.

5. A process for the solubilisation of a hydrocarbon into an aqueous solution which comprises the steps:

(a) forming an aqueous solution of water and a diblock polymer of t-butylstyrene/metal styrene sulfonate or a triblock polymer of t-butyl styrene/metal styrene sulfonate/t-butylstyrene;

(b) adding an oil to said aqueous solution of said diblock polymer or said triblock polymer; and

(c) stirring said oil and said aqueous solution of said diblock polymer or said triblock polymer until a homogeneous solution has been obtained.

6. A process according to claim 5 wherein said diblock polymer or triblock polymer is the polymer according to either of claims 1 and 2.

0114525

7. A process according to claim 6 wherein the hydrocarbon liquid is selected from aliphatic hydrocarbons having about 4 to about 12 carbon atoms, per molecule, cycloaliphatic hydrocarbons having about 5 to about 7 carbon atoms per molecule, aromatic hydrocarbons having about 6 to about 20 carbon atoms per molecule, aliphatic oils, naphthenic oils and aromatic oils.

# FIG. 1

t - BUTYLSTYRENE - STYRENE DIBLOCK POLYMER SYNTHESIS

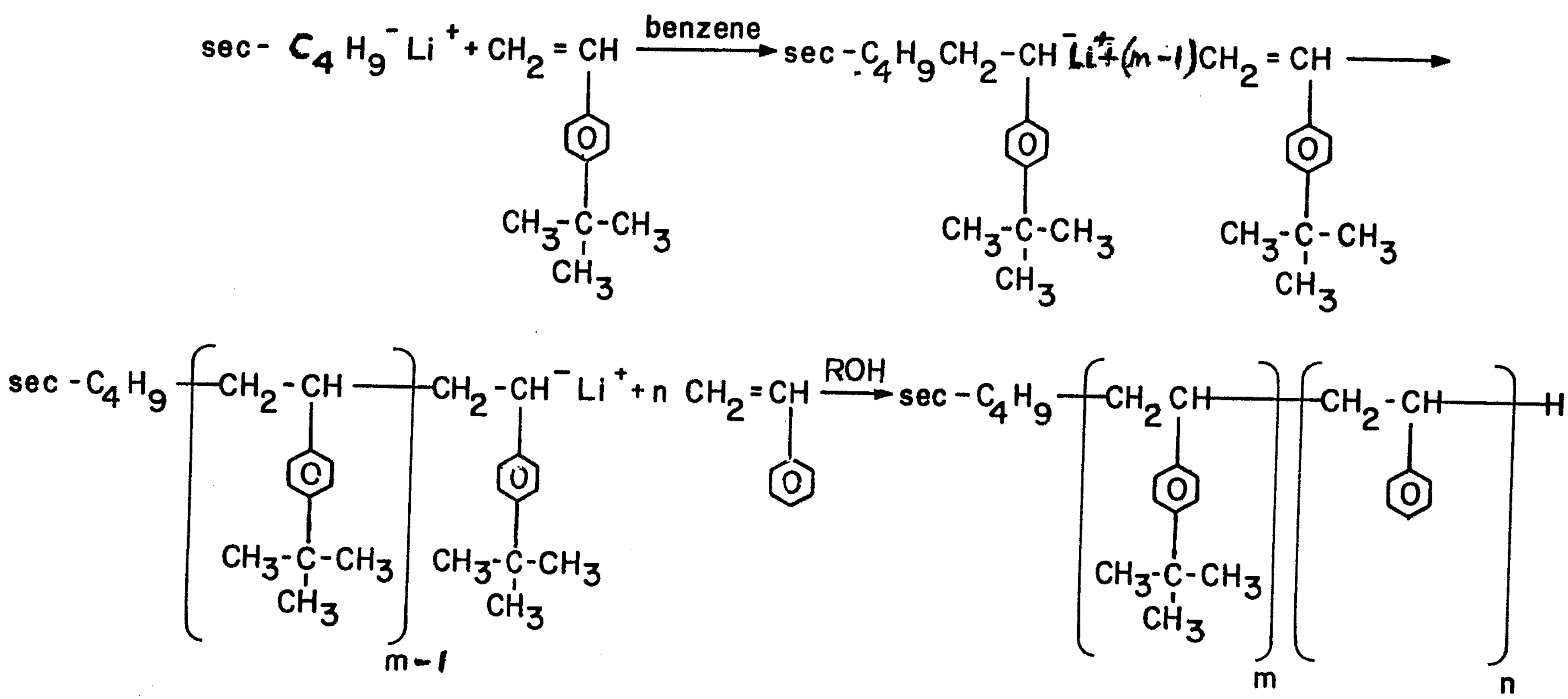

0114525

t-BUTYLSTYRENE-STYRENE-t-BUTYLSTYRENE TRIBLOCK POLYMER SYNTHESIS

FIG. 2

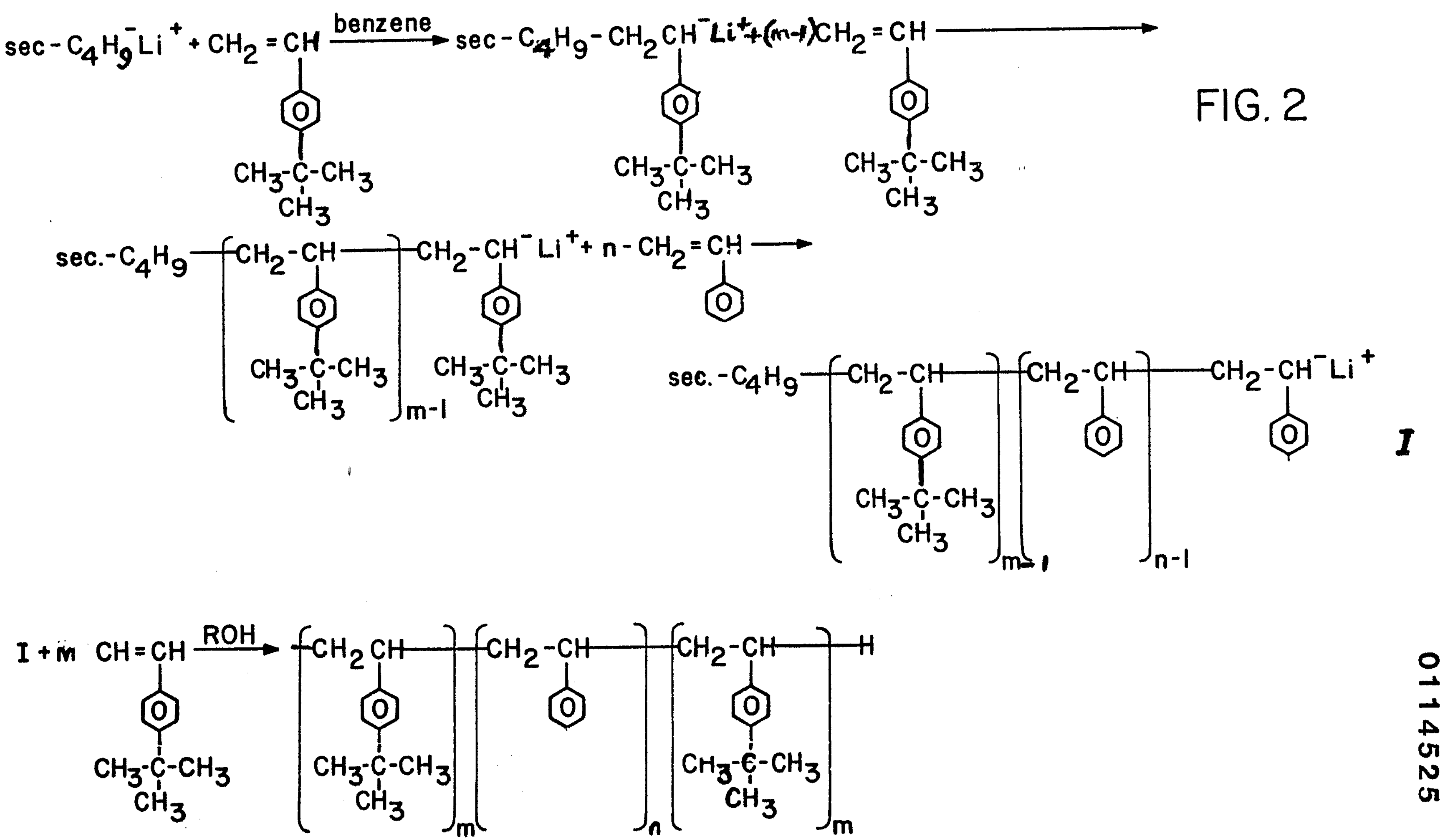

# FIG. 3

SULFONATION OF t-BUTYLSTYRENE-STYRENE BLOCK POLYMERS

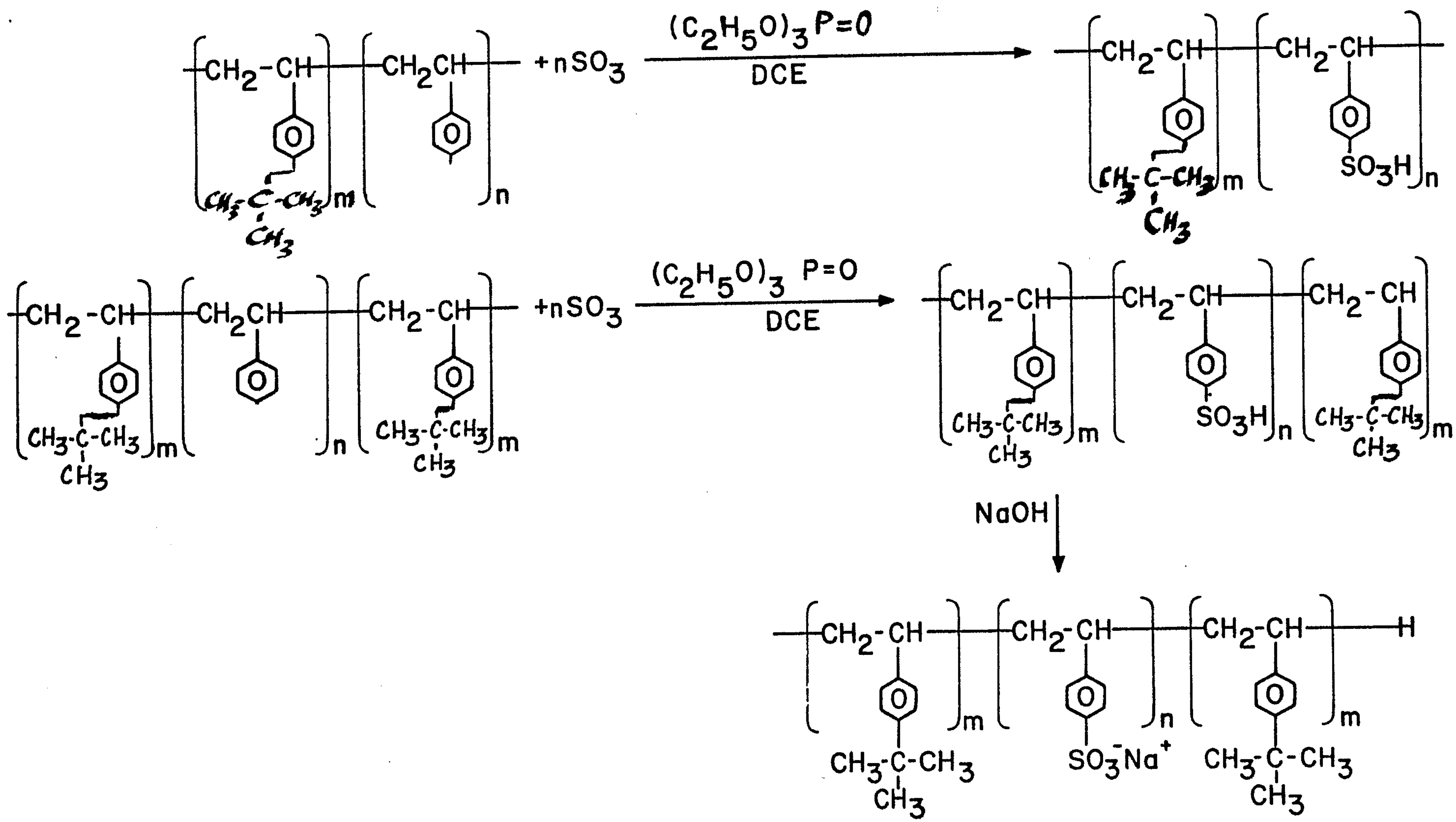

FIG. 4

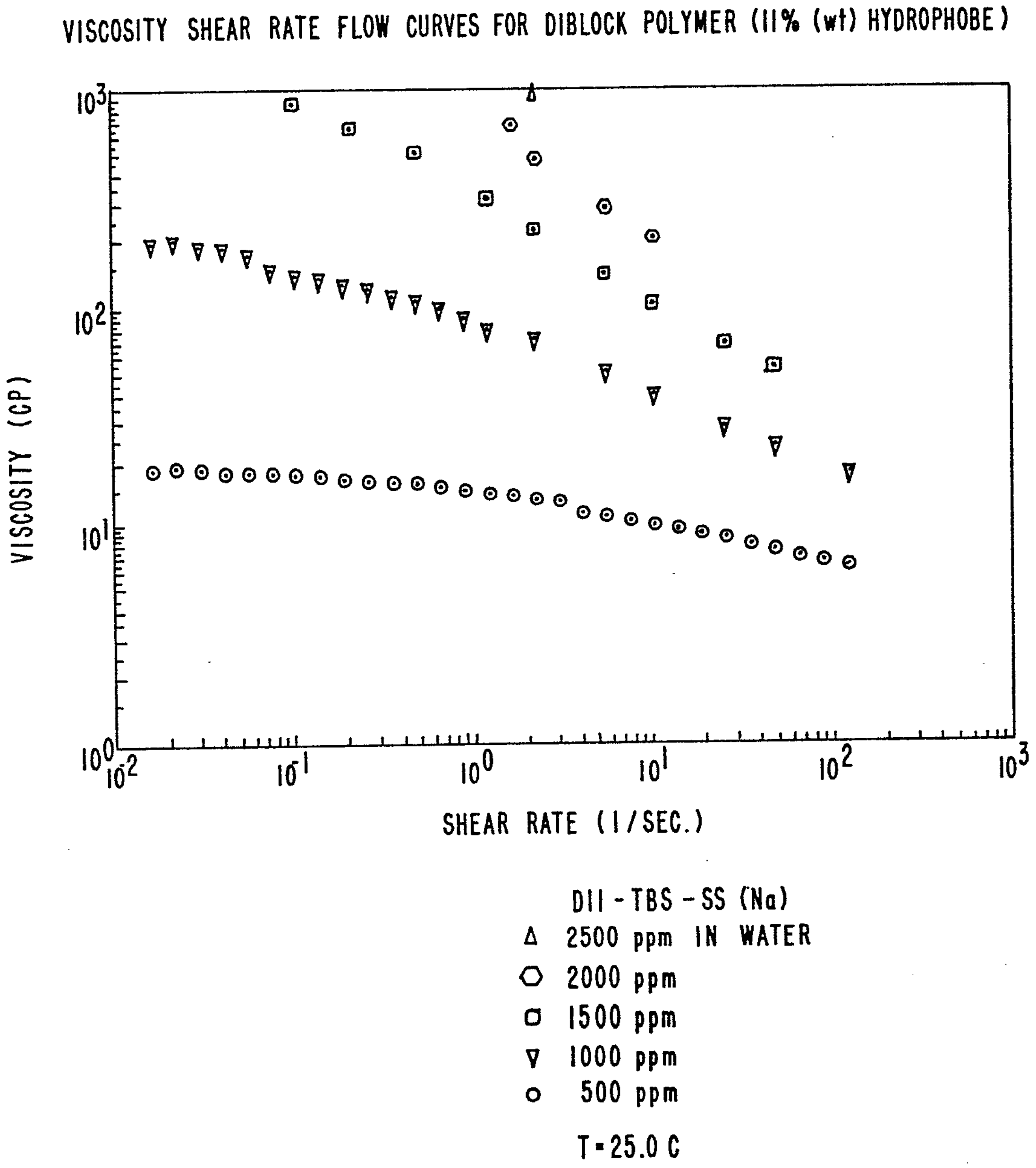
VISCOSITY SHEAR RATE FLOW CURVES FOR DIBLOCK POLYMER (11% (wt) HYDROPHOBE)
VISCOSITY (CP)
SHEAR RATE (1/SEC.)
DII - TBS - SS (Na)
Δ 2500 ppm IN WATER
2000 ppm
1500 ppm
1000 ppm
500 ppm
T=25.0 C

FIG. 5

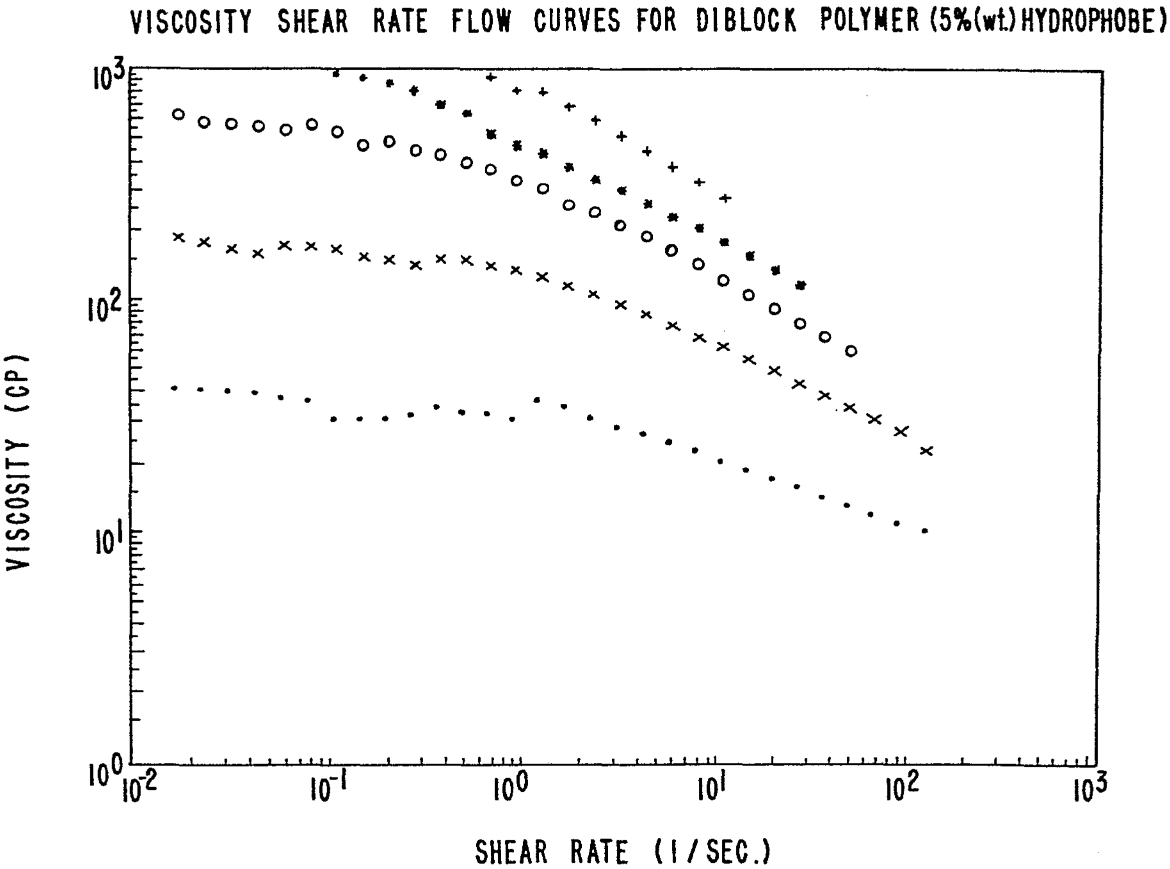


D5-TBS-SS (Na)

+ 2500 ppm IN WATER
* 2000 ppm
o 1500 ppm
× 1000 ppm
• 500 ppm

T=25.0C

FIG. 6

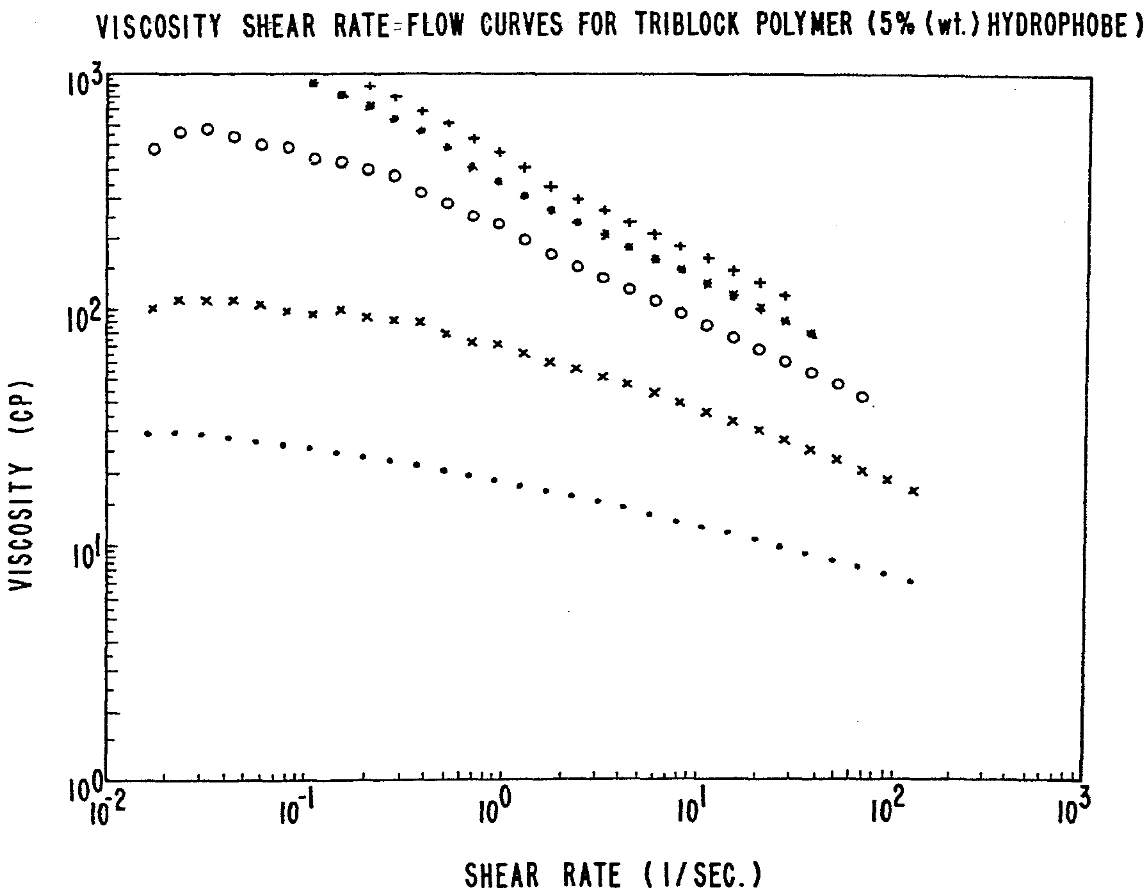


T5-TBS-SS (Na)
+ 2500 ppm IN WATER
* 2000 ppm
○ 1500 ppm
× 1000 ppm
• 500 ppm

T=25.0 C

FIG. 7

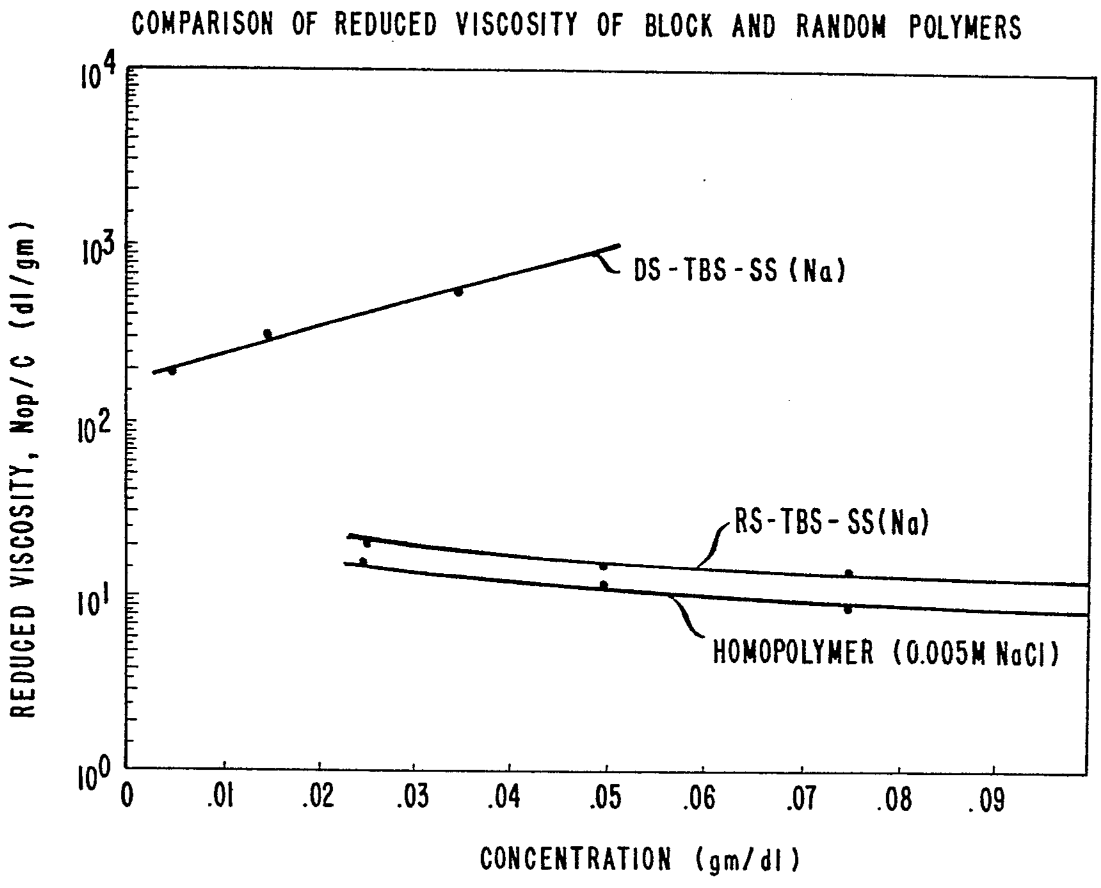
COMPARISON OF REDUCED VISCOSITY OF BLOCK AND RANDOM POLYMERS
10^4
10^3
10^2
10^1
10^0
REDUCED VISCOSITY, Nsp/C (dl/gm)
DS-TBS-SS (Na)
RS-TBS-SS(Na)
HOMOPOLYMER (0.005M NaCl)
0
.01
.02
.03
.04
.05
.06
.07
.08
.09
CONCENTRATION (gm/dl)

FIG. 8

VISCOSITY SHEAR RATE FLOW CURVES FOR DIBLOCK POLYMER (11% (wt) HYDROPHOBE)

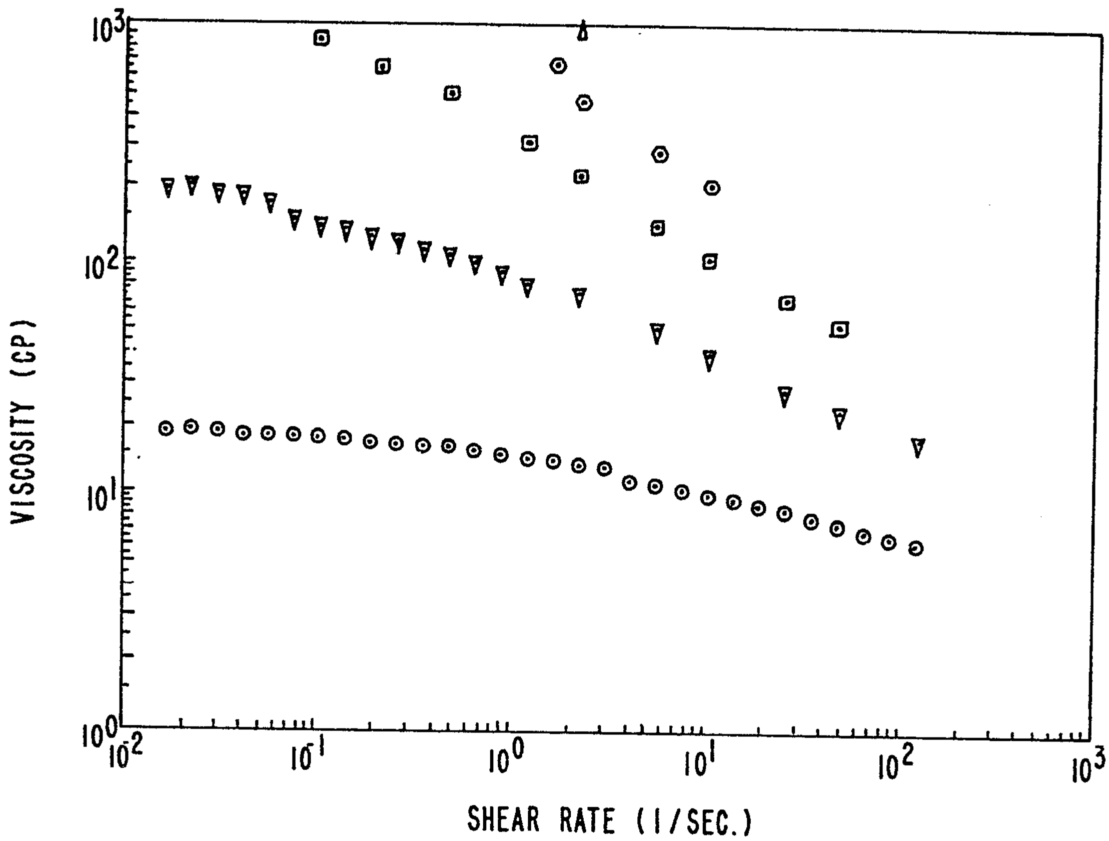


DII - TBS - SS (Na)
Δ 2500 ppm IN WATER
⬡ 2000 ppm
□ 1500 ppm
∇ 1000 ppm
○ 500 ppm

T = 25.0 C

FIG. 9

EFFECT OF TOLUENE SOLUBILIZATION ON VISCOSITY-SHEAR RATE FLOW CURVE

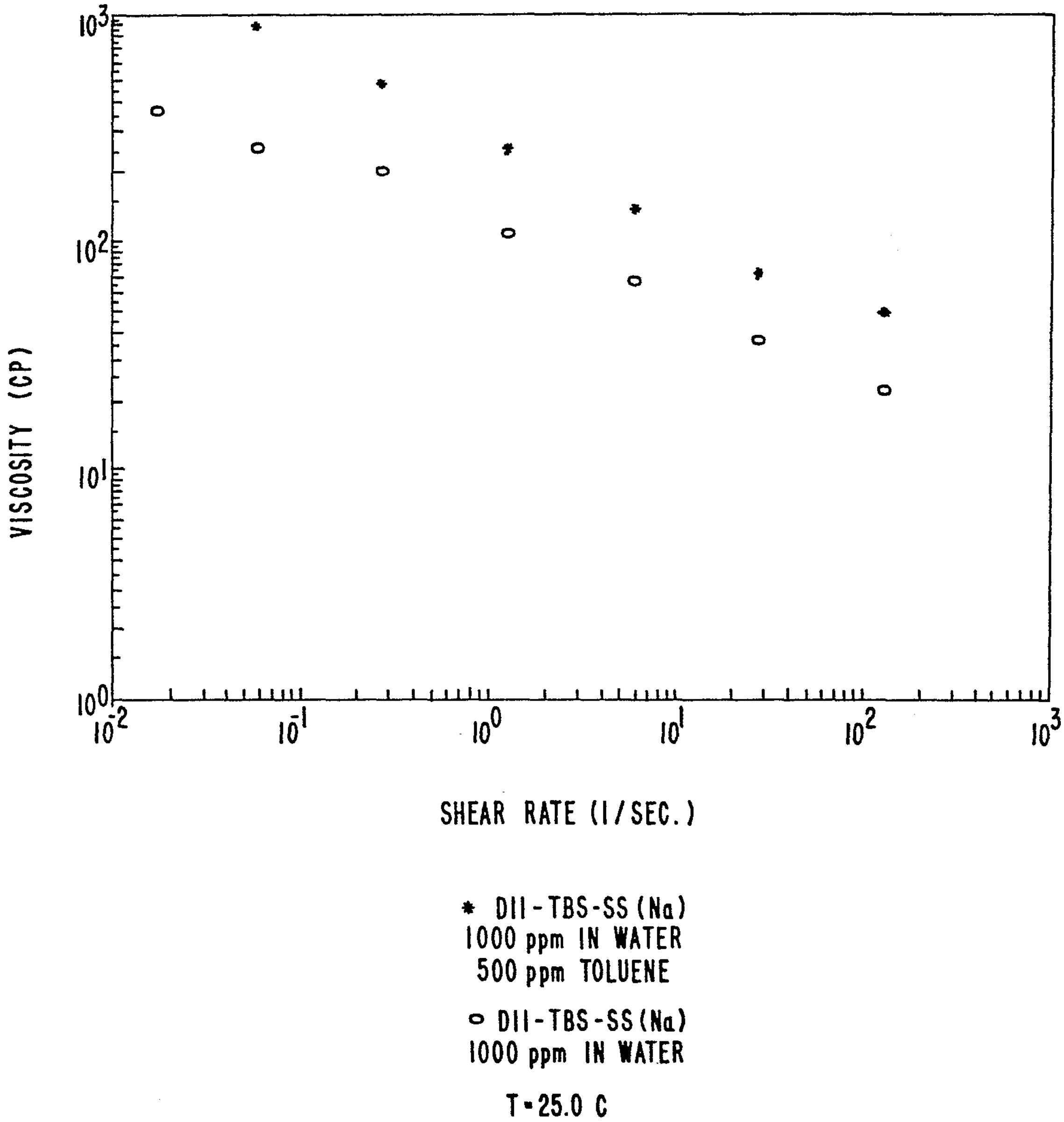

FIG. 10

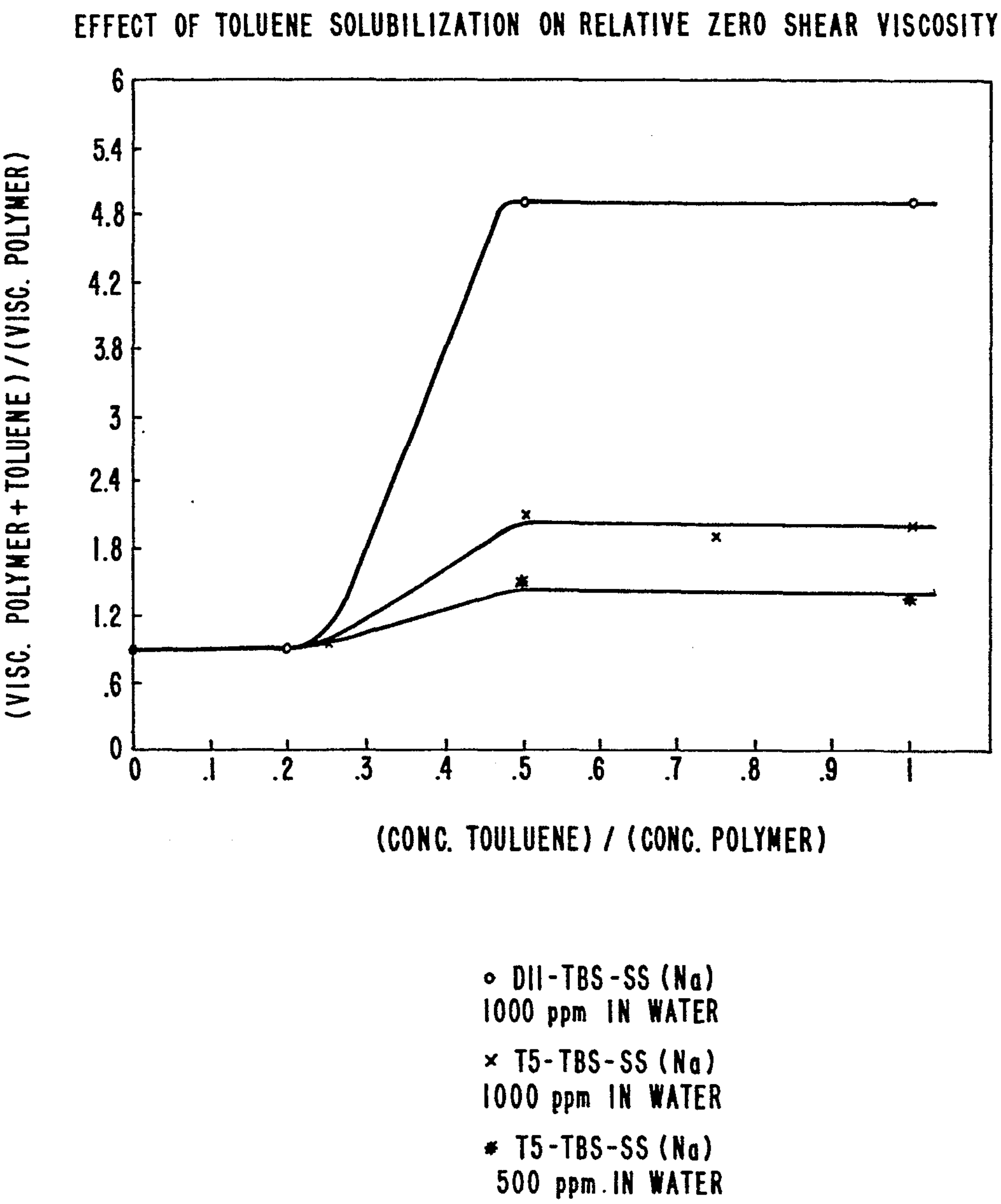
EFFECT OF TOLUENE SOLUBILIZATION ON RELATIVE ZERO SHEAR VISCOSITY
(VISC. POLYMER + TOLUENE) / (VISC. POLYMER)
6
5.4
4.8
4.2
3.8
3
2.4
1.8
1.2
.6
0
.1
.2
.3
.4
.5
.6
.7
.8
.9
1
(CONC. TOULUENE) / (CONC. POLYMER)
o DII-TBS-SS (Na)
1000 ppm IN WATER
× T5-TBS-SS (Na)
1000 ppm IN WATER
* T5-TBS-SS (Na)
500 ppm. IN WATER